# EUROPÄISCHE PATENTSCHRIFT

(11) **EP 2 931 840 B1**
(45) Veröffentlichungstag und Bekanntmachung des Hinweises auf die Patenterteilung: **18.01.2017**
(21) Anmeldenummer: 12805561.3
(22) Anmeldetag: 12.12.2012
(51) Int. Cl.: C10C 3/00, E01C 19/02, E01C 19/45, C08L 95/00

(54) **VERFAHREN UND ANLAGE ZUR HERSTELLUNG EINES BINDEMITTELSCHAUMS FÜR DIE ASPHALTHERSTELLUNG**
METHOD AND SYSTEM FOR PRODUCING A BINDER FOAM FOR PRODUCING ASPHALT
PROCÉDÉ ET INSTALLATION PERMETTANT DE PRÉPARER UNE MOUSSE DE LIANT DESTINÉE À LA FABRICATION D'ASPHALTE

(43) Veröffentlichungstag der Anmeldung: 21.10.2015
(73) Patentinhaber: Ammann Schweiz AG, 4900 Langenthal (CH)
(72) Erfinder: BIEDER, Andrea, CH-8005 Zürich (CH); WÄLCHLI, Fritz, CH-4713 Matzendorf (CH)
(74) Vertreter: Münch, Martin Walter
(86) Internationale Anmeldenummer: PCT/CH2012/000273
(87) Internationale Veröffentlichungsnummer: WO 2014/089712

(56) Entgegenhaltungen:
- WO-A1-00/68302
- WO-A1-87/02694
- WO-A2-2008/023982
- US-A- 3 254 045
- US-A- 4 692 350
- US-A- 5 827 360

## Beschreibung

### TECHNISCHES GEBIET

Die Erfindung betrifft ein Verfahren zur Herstellung eines Bindemittelschaums für die Asphaltherstellung, insbesondere zur Herstellung von Schaumbitumen, ein Verfahren zur Herstellung von Asphalt mit dem gemäss dem zuvor erwähnten Verfahren hergestellten Bindemittelschaum, eine Anlage zur Durchführung des erstgenannten Verfahrens sowie eine Verwendung der Anlage gemäss den Oberbegriffen der unabhängigen Patentansprüche.

### STAND DER TECHNIK

Um den Energiebedarf und die CO₂-Emissionen bei der Asphaltherstellung zu reduzieren, wurden in den letzten Jahren verschiedene Technologien entwickelt. Eine von diesen Technologien ist die Herabsetzung der Asphaltmischtemperatur durch die Verwendung von Schaumbitumen. Durch das Aufschäumen des Bitumens wird dessen Volumen vorübergehend vergrössert und, damit einhergehend, dessen Viskosität vorübergehend herabgesetzt. Hierdurch muss der mit dem Bitumen zu Asphalt zu vermischende Gesteinssplitt weniger stark aufgeheizt werden, um eine vollständige Benetzung der Oberflächen der Splittkörner sicherzustellen. Entsprechend wird weniger Brennstoff benötigt und damit auch weniger CO₂ produziert.

Bei den heute bekannten Verfahren zur Herstellung von Bindemittelschaum für die Asphaltherstellung wird Wasser in einen heissen, unter Überdruck stehenden Bitumenstrom eingespritzt. Der so erhaltene Mischstrom aus Bitumen und Wasser wird, gegebenenfalls nachdem er vorgängig unter Druck einen Mischer durchlaufen hat, über Schäumdüsen auf Atmosphärendruck geführt, wobei das Bitumen durch das Verdampfen des darin mitgeführten Wassers aufgeschäumt wird.

Dabei variieren die Qualitäten der mit den bekannten Verfahren erhaltenen Bitumenschäume erheblich.

Um eine gute Benetzung des Gesteinssplitts beim Mischen und eine lange Einbauzeit des Asphalts zu erhalten, ist es wünschenswert, einen stark aufgeschäumten Bindemittelschaum mit möglichst feiner Blasenstruktur zu verwenden, da derartiger Schaum nur sehr langsam zusammenfällt und das Bindemittel dadurch relativ lange eine reduzierte Viskosität aufweist.

Derartiger Schaum lässt sich heute nur mit relativ aufwendigen Verfahren herstellen, z.B. bei welchen der Mischstrom aus Bitumen und Wasser vorgängig zum Aufschäumen durch einen statischen Mischer geführt wird. Hierdurch ergibt sich jedoch ein relativ grosser anlagentechnischer Aufwand, und die Wirtschaftlichkeit wird durch die Notwendigkeit der häufigen Reinigung/Wartung des Mischers negativ beeinflusst.

US 4,692,350 offenbart verschiedene Verfahren und Anlagen zur Herstellung von Schaumbitumen, bei denen das Wasser entweder im Gleichstrom oder unter einem Winkel von 90° in den Bitumenstrom eingedüst wird. Es werden Anlagen mit und ohne stromabwärts der Mischstelle angeordneten statischen Mischvorrichtungen offenbart.

Mit den heute bekannten einfachen Verfahren, welche mit einfachen kostengünstigen Anlagen ohne Mischvorrichtungen durchzuführen sind, lässt sich hingegen die gewünschte Schaumqualität nicht erreichen.

### DARSTELLUNG DER ERFINDUNG

Es stellt sich deshalb die Aufgabe, Verfahren und Vorrichtungen zur Verfügung zu stellen, welche die zuvor genannten Nachteile des Standes der Technik nicht aufweisen oder zumindest teilweise vermeiden.

Diese Aufgabe wird durch die Gegenstände der unabhängigen Patentansprüchen gelöst.

Entsprechend betrifft ein erster Aspekt der Erfindung ein Verfahren zur Herstellung eines Bindemittelschaums, bevorzugterweise zur Herstellung von Schaumbitumen, für die Asphaltherstellung. Dabei werden als Ausgangsprodukte ein Strom aus einem erhitzten und unter Überdruck stehenden Bindemittel, z.B. Bitumen, sowie eine Flüssigkeit, z.B. Wasser, mit einer niedrigeren Verdampfungstemperatur bei Atmosphärendruck als die Temperatur des bereitgestellten Bindemittelstromes, bereitgestellt. Die Flüssigkeit wird über eine oder mehrere Düsen unter einem Winkel von grösser 120°, noch bevorzugter unter 180° zur Strömungsrichtung des Bindemittelstromes, d.h. in einer Richtung schräg entgegen oder vollständig entgegen der Strömungsrichtung des Bindemittelstromes, unter Überdruck in den Bindemittelstrom eingedüst, so dass stromabwärts von der Stelle der Eindüsung ein unter Überdruck stehender Mischstrom aus Bindemittel mit darin verteilten Flüssigkeitstropfen bzw. mit darin verteilten Flüssigkeitstropfen und aus diesen entstandenen Dampfblasen vorliegt. Weiter stromabwärts wird der Druck dieses Mischstromes so weit reduziert, bevorzugterweise auf Atmosphärendruck, dass es zum Aufschäumen des Bindemittels infolge einer Verdampfung der in diesem enthaltenen Flüssigkeitstropfen und/oder infolge einer Expansion der aus den darin enthaltenen Flüssigkeitstropfen entstandenen Dampfblasen kommt.

Mit andere Worten ausgedrückt betrifft der erste Aspekt der Erfindung ein Verfahren zur Herstellung eines Bindemittelschaumes für die Asphaltherstellung, bei welchem in einen unter Überdruck stehenden Strom aus erhitztem Bindemittel, bevorzugterweise Bitumen, eine Flüssigkeit, welche eine niedrigere Verdampfungstemperatur bei Atmosphärendruck aufweist als die Temperatur des erhitzten Bindemittelstromes, bevorzugterweise Wasser, unter einem Winkel von grösser 120° zur Strömungsrichtung des Bindemittelstromes eingedüst wird, derart, dass stromabwärts von der Eindüsungsstelle ein Mischstrom unter Überdruck aus Bindemittel mit darin verteilten Flüssigkeitstropfen bzw. mit darin verteilten Flüssigkeitstropfen und aus diesen entstandenen Dampfblasen vorliegt. Der Druck dieses Mischstromes wird sodann herabgesetzt, bevorzugterweise auf Atmosphärendruck, wodurch es zu einem Aufschäumen des Bindemittels infolge einer Verdampfung der in diesem enthaltenen Flüssigkeitstropfen und/oder einer Expansion der aus den Flüssigkeitstropfen entstandenen Dampfblasen kommt.

Es hat sich gezeigt, dass sich mit dem erfindungsgemässen Verfahren mit geringem anlagentechnischen Aufwand qualitativ hochwertige Bindemittelschäume mit feiner Blasenstruktur herstellen lassen, so dass es auch bei hohen Anforderungen an die Schaumqualität möglich wird, auf mechanische Mischvorrichtungen, wie z.B. statische Mischer, zur Durchmischung des Mischstromes aus Bindemittel mit darin verteilten Flüssigkeitstropfen bzw. mit darin verteilten Flüssigkeitstropfen und aus diesen entstandenen Dampfblasen zu verzichten, was auch einer bevorzugten Ausführungsform des erfindungsgemässen Verfahrens entspricht.

Ebenfalls bevorzugt ist es, dass das Eindüsen der Flüssigkeit in den Bindemittelstrom im Zentrum des Bindemittelstromes erfolgt.

Durch diese Massnahmen lässt sich eine besonders gute Verteilung der Flüssigkeit im Bindemittelstrom erreichen, wodurch sich die Schaumqualität weiter verbessern lässt.

Mit Vorteil wird eine Flüssigkeit bereitgestellt und eingedüst, in welcher das Bindemittel unlöslich oder lediglich teilweise löslich ist. Hierdurch ergibt sich der Vorteil, dass die gesamte eingedüste Flüssigkeitsmenge oder zumindest ein Grossteil davon als Treibmittel zum Aufschäumen des Bindemittels nutzbar ist.

In einer bevorzugten Ausführungsform des Verfahrens wird die Flüssigkeit unter einem Druck in den Bindemittelstrom eingedüst, welcher höher ist als der Druck im Bindemittelstrom an der Eindüsungsstelle, und zwar bevorzugterweise mindestens 1 bar höher ist als der Druck im Bindemittelstrom an der Eindüsungsstelle.

Dabei ist es weiter bevorzugt, dass der Eindüsungsdruck der Flüssigkeit derartig eingestellt wird, dass die Eindüsungsgeschwindigkeit der Flüssigkeit mindestens doppelt so gross ist wie die Strömungsgeschwindigkeit des Bindemittelstromes im Bereich der Eindüsungsstelle.

Es hat sich gezeigt, dass diese Massnahmen die Bildung feiner Flüssigkeitstropfen in der Bindemittelströmung begünstigen und damit eine weitere Verbesserung der Schaumqualität ermöglichen.

In einer weiteren bevorzugten Ausführungsform des Verfahrens wird die Strömungsgeschwindigkeit des Bindemittelstromes derartig eingestellt, dass zumindest in einem Teilbereich des Bindemittelstromes, bevorzugterweise im Bereich der Eindüsungsstelle und mit Vorteil zusätzlich zumindest einen gewissen Teilbereich von der Eindüsungsstelle stromabwärts, eine Dehnströmung vorliegt.

Noch bevorzugter ist es dabei, dass über einen Grossteil der Erstreckung oder über die gesamte Erstreckung des Bindemittelstromes zwischen der Eindüsungsstelle und der Stelle, an welcher der Druck der Mischströmung herabgesetzt wird zum Aufschäumen des Bindemittels, eine Dehnströmung vorliegt.

Durch die Erzeugung einer Dehnströmung wird es möglich, die nach der Eindüsungsstelle im Bindemittelstrom mitgeführten Flüssigkeitstropfen weiter in kleinere Flüssigkeitstropfen aufzuteilen, was einer feinen Schaumstruktur des aus dem Mischstrom erzeugten Bindemittelschaums förderlich ist.

Mit Vorteil wird beim erfindungsgemässen Verfahren die Erstreckung des Bindemittelstromes zwischen der Eindüsungsstelle und der Stelle, an welcher der Druck der Mischströmung zum Aufschäumen des Bindemittels herabgesetzt wird, derartig gewählt wird, dass sie einem Mehrfachen, bevorzugterweise zwischen dem Fünfundzwanzigfachen und dem Fünfzigfachen des Durchmessers bzw. des hydraulischen Durchmessers des Bindemittelstromes an der Eindüsungsstelle entspricht. Eine derartige Dimensionierung hat sich als besonders praktikabel erwiesen.

Das Herabsetzen des Druckes des Mischstromes aus Bindemittel mit darin verteilten Flüssigkeitstropfen bzw. mit darin verteilten Flüssigkeitstropfen und aus diesen entstandenen Dampfblasen zum Aufschäumen des Bindemittels erfolgt bevorzugterweise über eine oder mehrere, bevorzugterweise identische Schäumdüsen, z.B. direkt in einen Asphaltmischer hinein. Die Verwendung von Düsen ermöglicht eine kontinuierliche Prozessführung und einen kontrollierten Druckabbau.

Die eingedüste Flüssigkeitsmenge pro Zeiteinheit beträgt bevorzugterweise 1 bis 8 Volumenprozent, noch bevorzugter 2 bis 4 Volumenprozent des Volumenstroms des Bindemittelstromes an der Eindüsungsstelle. Derartige Mengenverhältnisse haben sich in der Praxis als besonders geeignet erwiesen.

In noch einer weiteren bevorzugten Ausführungsform des Verfahrens werden die Temperaturen und Drücke des Bindemittelstromes und der eingedüsten Flüssigkeit so gewählt, dass an der Eindüsungsstelle ein Viskositätsverhältnis zwischen eingedüster Flüssigkeit und Bindemittel von grösser 0.5 vorliegt, bevorzugterweise von etwa 1.0. Hierdurch wird die Bildung feiner Flüssigkeitstropfen in der Bindemittelströmung begünstigt, was einer guten Schaumqualität zuträglich ist.

In noch einer weiteren bevorzugten Ausführungsform des Verfahrens werden die Temperaturen des Bindemittelstromes und der eingedüsten Flüssigkeit sowie deren Mengenverhältnis so gewählt, dass die theoretische Mischtemperatur der Mischströmung für den Fall, dass die eingedüsten Flüssigkeitstropfen in der flüssigen Phase verbleiben, mindestens 30%, bevorzugterweise mindestens 50%, und noch bevorzugter mindestens 60% über der Verdampfungstemperatur der Flüssigkeit bei Atmosphärendruck liegt.

In noch einer weiteren bevorzugten Ausführungsform des Verfahrens wird der Druck in der Mischströmung zwischen der Eindüsungsstelle und der Stelle, an welcher der Druck der Mischströmung herabgesetzt wird zum Aufschäumen des Bindemittels, derartig eingestellt, dass die in der Mischströmung enthaltenen Flüssigkeitstropfen bis zu der letztgenannten Stelle flüssig sind und erst durch das Herabsetzen des Druckes der Mischströmung zum Aufschäumen des Bindemittels verdampfen.

Es hat sich gezeigt, dass durch die beiden letztgenannten Verfahrensvarianten, insbesondere beim Herabsetzen des Druckes der Mischströmung auf Atmosphärendruck, eine besonders gute Schäumwirkung erzielt werden kann.

Als Bindemittel kommt bei dem erfindungsgemässen Verfahren bevorzugterweise Bitumen zum Einsatz, mit oder ohne zusätzlichen Additiven, und als Flüssigkeit bevorzugterweise Wasser, ebenfalls mit oder ohne Zusatzstoffe. Derartige Ausgangsmaterialien sind in der Asphaltherstellung etabliert und seit Jahrzehnten bewährt.

Wird ein Bindemittelstrom bereitgestellt, welcher im Wesentlichen aus Bitumen besteht, so weist dieser bevorzugterweise eine Temperatur von mindestens 150°C auf. Bei derartigen Bitumentemperaturen kann als Flüssigkeit Wasser mit normaler Raumtemperatur verwendet werden, und es kann auf eine spezielle Wasservorwärmung verzichtet werden.

Ein zweiter Aspekt der Erfindung betrifft ein Verfahren zur Herstellung von Asphalt. Dabei wird ein mit dem Verfahren gemäss dem ersten Aspekt der Erfindung hergestellter Bindemittelschaum, bevorzugterweise ein mit dem Verfahren hergestellter Bitumenschaum, mit erhitztem Gesteinssplitt und gegebenenfalls weiteren Komponenten vermischt.

Ein dritter Aspekt der Erfindung betrifft eine Anlage zur Durchführung des Verfahrens gemäss dem ersten Aspekt der Erfindung. Die Anlage weist einen Strömungskanal auf, der an einem ersten seiner beiden Enden mit einer Zuführung für das aufzuschäumende Bindemittel, insbesondere Bitumen, verbunden oder verbindbar ist, zur Erzeugung einer Strömung unter Überdruck aus erhitztem Bindemittel im Strömungskanal im bestimmungsgemässen Betrieb. Weiter umfasst die Anlage Mittel zum Eindüsen einer Flüssigkeit, bevorzugterweise Wasser, in die im bestimmungsgemässen Betrieb in dem Strömungskanal erzeugte Strömung aus erhitztem Bindemittel, so dass stromabwärts von der Eindüsungsstelle ein unter Überdruck stehender Mischstrom aus Bindemittel mit darin verteilten Flüssigkeitstropfen bzw. mit darin verteilten Flüssigkeitstropfen und aus diesen entstandenen Dampfblasen im Strömungskanal erzeugt werden kann. Die Mittel zum Eindüsen der Flüssigkeit sind derartig ausgebildet, dass die Flüssigkeit unter einem Winkel von grösser 120°, bevorzugterweise unter einem Winkel von 180°zur Strömungsrichtung der im bestimmungsgemässen Betrieb in dem Strömungskanal erzeugten Strömung aus erhitztem Bindemittel in diese Strömung eingedüst werden kann, d.h. in einer Richtung schräg entgegen oder vollständig entgegen der bestimmungsgemässen Strömungsrichtung des Bindemittelstromes.

Des weiteren umfasst die Anlage Mittel zum Entlassen des Mischstroms aus Bindemittel mit darin verteilten Flüssigkeitstropfen bzw. mit darin verteilten Flüssigkeitstropfen und aus diesen entstandenen Dampfblasen aus dem Strömungskanal unter einer bevorzugterweise sprunghaften Herabsetzung des Druckes des Mischstromes, mit Vorteil auf Atmosphärendruck, wodurch ein Aufschäumen des Bindemittels infolge einer Verdampfung der in diesem enthaltenen Flüssigkeitstropfen und/oder einer Expansion der aus den Flüssigkeitstropfen entstandenen Dampfblasen erreicht werden kann. Bevorzugterweise umfassen die Mittel zum Entlassen des Mischstroms aus dem Strömungskanal zum Aufschäumen des Bindemittels eine oder mehrere, bevorzugterweise identische Schäumdüsen.

Mit der erfindungsgemässen Anlage lassen sich mit geringem anlagentechnischen Aufwand nach dem Verfahren gemäss dem ersten Aspekt der Erfindung qualitativ hochwertige Bindemittelschäume mit feiner Blasenstruktur herstellen.

Ebenfalls bevorzugt ist es, dass die Anlage derartig ausgebildet ist, dass das Eindüsen der Flüssigkeit in den Bindemittelstrom im Zentrum des Bindemittelstromes erfolgen kann.

Durch diese Massnahmen lässt sich eine besonders gute Verteilung der Flüssigkeit im Bindemittelstrom erreichen und die Schaumqualität weiter verbessern.

In einer weiteren bevorzugten Ausführungsform der Anlage weist diese zwischen den Mitteln zur Eindüsung der Flüssigkeit und den Mittel zum Entlassen des Mischstroms aus dem Strömungskanal zum Aufschäumen des Bindemittels keine mechanischen Mischvorrichtungen, wie z.B. statische Mischer, auf. Derartige Anlagen sind robust und betriebssicher sowie kostengünstig in der Anschaffung und im Unterhalt.

Die anspruchsgemässen Mittel zum Eindüsen der Flüssigkeit in die im bestimmungsgemässen Betrieb in dem Strömungskanal erzeugte Strömung aus erhitztem Bindemittel stellen keine mechanischen Mischvorrichtungen im anspruchsgemässen Sinne dar, auch wenn diese, insbesondere bei Eindüsungswinkeln von grösser als 90° und zentraler Eindüsung, durch Bauelemente wie Zuführungsleitungen und/oder Tragstrukturen die Strömung stromabwärts der Eindüsungsstelle durch Umlenkung beeinflussen können.

In noch einer weiteren bevorzugten Ausführungsform der Anlage entspricht die Erstreckung des Strömungskanals zwischen der Eindüsungsstelle und der Stelle, an welcher der Druck der Mischströmung im bestimmungsgemässen Betrieb herabgesetzt wird zum Aufschäumen des Bindemittels, einem Mehrfachen, bevorzugterweise zwischen dem Fünfundzwanzigfachen und dem Fünfzigfachen des Durchmessers des Strömungskanals an der Eindüsungsstelle. Eine derartige Dimensionierung hat sich als besonders praktikabel für die Erzielung guter Schaumqualitäten erwiesen.

Ein vierter Aspekt der Erfindung betrifft eine Verwendung der Anlage gemäss dem dritten Aspekt der Erfindung zur Herstellung von Schaumbitumen. Derartige Verwendungen solcher Anlagen sind besonders bevorzugt.

### KURZE BESCHREIBUNG DER ZEICHNUNGEN

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 eine perspektivische Draufsicht auf eine erfindungsgemässe Anlage;
Fig. 2 eine perspektivische Schnittdarstellung der Anlage aus Fig. 1; und
Fig. 3 einen Längsschnitt durch die Anlage aus Fig. 1.

### WEGE ZUR AUSFÜHRUNG DER ERFINDUNG

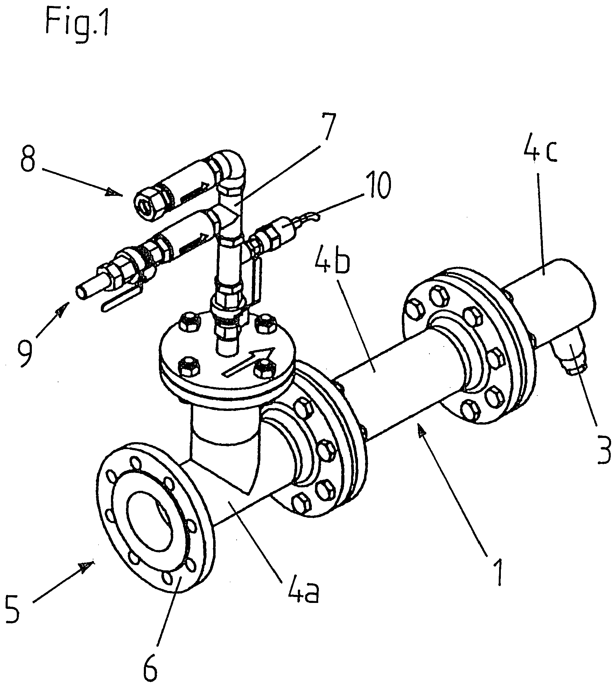

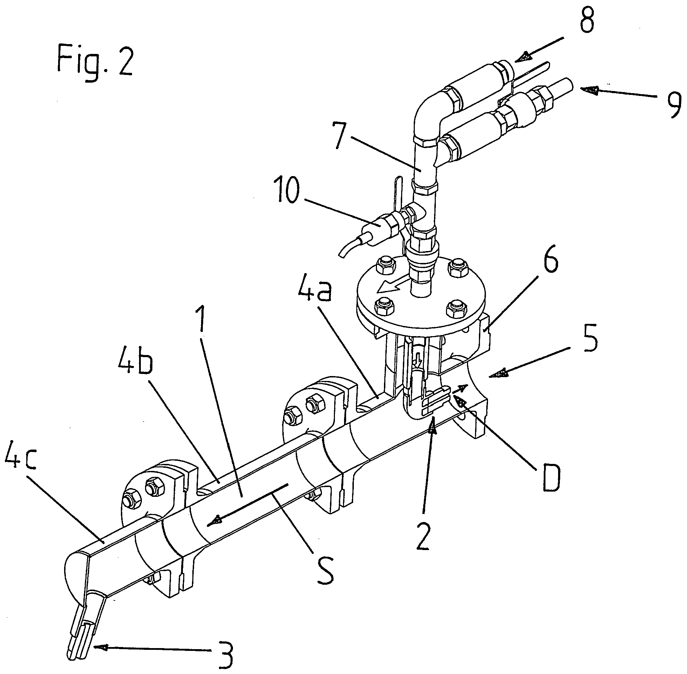

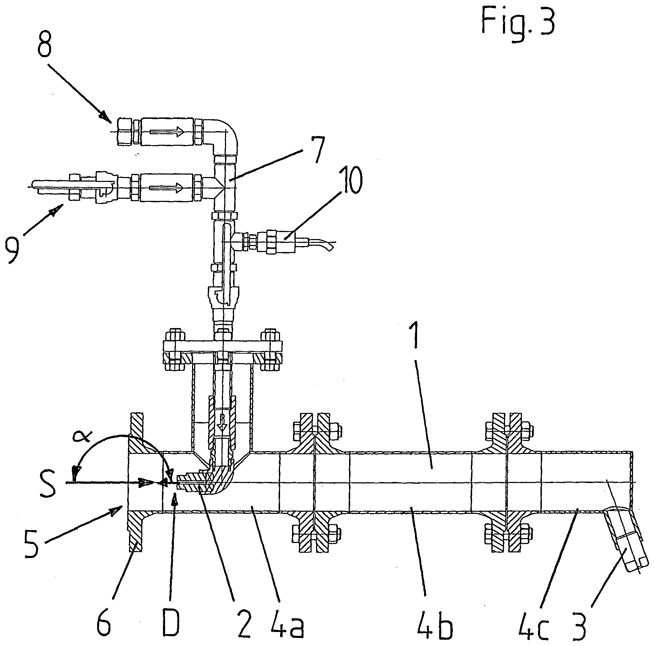

Die Figuren 1 bis 3 zeigen eine erfindungsgemässe Anlage zur Durchführung des erfindungsgemässen Verfahrens, einmal in einer perspektivischen Draufsicht (Fig. 1), einmal in einer perspektivischen Schnittdarstellung (Fig. 2) und einmal im Längsschnitt (Fig. 3).

Wie aus einer Zusammenschau dieser Figuren hervorgeht, weist die Anlage einen von hintereinander angeordneten und über Flanschpartien miteinander verbundenen Rohrabschnitten 4a, 4b, 4c gebildeten Strömungskanal 1 auf, der an seinem Zuführungsende 5 (das anspruchsgemässe erste seiner beiden Enden) mit einem Flansch 6 versehen ist, welcher im bestimmungsgemässen Betrieb der Anlage der Ankopplung des Strömungskanals 1 an eine Zuführungsleitung (nicht gezeigt) dient, über welche unter Überdruck ein Strom aus erhitztem Bitumen in den Strömungskanal 1 eingespeist wird.

Angeordnet im Zentrum des ersten Rohrabschnitts 4a des Strömungskanals 1 ist eine zum Zuführungsende 5 hin gerichtete Düse 2, welche mit einer Zuführungsleitung 7 verbunden ist, über welche im bestimmungsgemässem Betrieb der Anlage ein Strom aus Wasser unter Überdruck zur Düse 2 zugeführt wird, zur Eindüsung des Wassers in den heissen, unter Überdruck stehenden Bitumenstrom. Die Zuführungsleitung 7 verfügt über einen Wasseranschluss 8 zur Zuführung von Wasser unter Überdruck im bestimmungsgemässen Betrieb, einen Reinigungsmittelanschluss 9 zur Zuführung von Reinigungsmittel, z.B. Druckluft, zwecks Reinigung der Düse 2 nach dem bestimmungsgemässen Betrieb sowie einen Drucksensor 10, mit welchem der Druck in der Zuführungsleitung 7 überwacht werden kann. Wie insbesondere aus Fig. 3 ersichtlich ist, erfolgt die Eindüsung des Wassers in den Bitumenstrom aufgrund der Anordnung und Orientierung der Düse 2 im bestimmungsgemässen Betrieb im Zentrum des Strömungskanals 1, und damit im Zentrum des darin geführten Bitumenstromes, und unter einem Winkel α von 180°zur Strömungsrichtung S der im Strömungskanal 1 erzeugten Strömung aus erhitztem Bitumen. Durch das Eindüsen des Wassers in den Bitumenstrom ergibt sich im bestimmungsgemässen Betrieb stromabwärts von der Eindüsungsstelle D ein unter Überdruck stehender Mischstrom aus Bitumen mit darin fein verteilten Wassertropfen.

Angeordnet am Ende des letzten Rohrabschnitts 4c des Strömungskanals 1 ist eine Schäumdüse 3, über welche der unter Überdruck stehende Mischstrom aus Bitumen mit darin verteilten Wassertropfen den Strömungskanal 1 im bestimmungsgemässe Betrieb verlässt und dabei im Druck auf Atmosphärendruck herabgesetzt wird, wobei er infolge einer Verdampfung der darin enthaltenen Wassertropfen und/oder einer Expansion der aus den Wassertropfen entstandenen Dampfblasen aufschäumt.

Wie aus den Figuren weiter zu erkennen ist, weist die Anlage zwischen der Düse 2 zur Wassereindüsung in den Bitumenstrom und der Schäumdüse 3 zum Entlassen des Mischstroms aus Bitumen und eingedüsten Wassertropfen aus dem Strömungskanal 1 keinerlei mechanischen Mischvorrichtungen oder Strömungshindernisse auf, sondern ist als glatte, geradlinige Rohrleitung ausgebildet.

Während in der vorliegenden Anmeldung bevorzugte Ausführungen der Erfindung beschrieben sind, ist klar darauf hinzuweisen, dass die Erfindung nicht auf diese beschränkt ist und auch in anderer Weise innerhalb des Umfangs der nun folgenden Ansprüche ausgeführt werden kann.

## Patentansprüche

1. Verfahren zur Herstellung eines Bindemittelschaumes für die Asphaltherstellung, insbesondere zur Herstellung von Schaumbitumen, umfassend die Schritte:
a) Bereitstellen eines Stromes aus erhitztem Bindemittel, insbesondere Bitumen, unter Überdruck;
b) Bereitstellen einer Flüssigkeit, insbesondere Wasser, welche eine niedrigere Verdampfungstemperatur bei Atmosphärendruck aufweist als die Temperatur des bereitgestellten erhitzten Bindemittelstromes;
c) Eindüsen der Flüssigkeit unter Überdruck in den Bindemittelstrom, derart, dass stromabwärts von der Eindüsungsstelle ein Mischstrom unter Überdruck aus Bindemittel mit darin verteilten Flüssigkeitstropfen oder mit darin verteilten Flüssigkeitstropfen und aus diesen entstandenen Dampfblasen vorliegt; und
d) Herabsetzen des Druckes des Mischstromes, insbesondere auf Atmosphärendruck, zum Aufschäumen des Bindemittels infolge einer Verdampfung der in diesem enthaltenen Flüssigkeitstropfen und/oder Expansion der aus den Flüssigkeitstropfen entstandenen Dampfblasen,
**dadurch gekennzeichnet, dass** das Eindüsen der Flüssigkeit in den Bindemittelstrom unter einem Winkel (α) von grösser 120°, insbesondere unter einem Winkel (α) von 180° zur Strömungsrichtung (S) des Bindemittelstromes erfolgt, d.h. in einer Richtung schräg entgegen oder vollständig entgegen der Strömungsrichtung des Bindemittelstromes.

2. Verfahren nach Anspruch 1, wobei zwischen dem Eindüsen der Flüssigkeit und dem Herabsetzen des Druckes des Mischstromes zum Aufschäumen des Bindemittels keine Durchmischung des Mischstromes mittels mechanischer Mischvorrichtungen, insbesondere statischer Mischer, erfolgt.

3. Verfahren nach einem der vorangehenden Ansprüche, wobei das Eindüsen der Flüssigkeit in den Bindemittelstrom in das Zentrum des Bindemittelstromes erfolgt.

4. Verfahren nach einem der vorangehenden Ansprüche, wobei eine Flüssigkeit bereitgestellt und eingedüst wird, in welcher das Bindemittel unlöslich oder lediglich teilweise löslich ist.

5. Verfahren nach einem der vorangehenden Ansprüche, wobei die Flüssigkeit unter einem Druck in den Bindemittelstrom eingedüst wird, welcher höher ist als der Druck im Bindemittelstrom an der Eindüsungsstelle (D), insbesondere mindestens 1 bar höher ist als der Druck im Bindemittelstrom an der Eindüsungsstelle (D).

6. Verfahren nach Anspruch 5, wobei der Eindüsungsdruck der Flüssigkeit derartig eingestellt wird, dass die Eindüsungsgeschwindigkeit der Flüssigkeit mindestens doppelt so gross ist wie die Strömungsgeschwindigkeit des Bindemittelstromes im Bereich der Eindüsungsstelle (D).

7. Verfahren nach einem der vorangehenden Ansprüche, wobei die Strömungsgeschwindigkeit des Bindemittelstromes derartig eingestellt wird, dass zumindest in einem Teilbereich des Bindemittelstromes, insbesondere im Bereich der Eindüsungsstelle (D), eine Dehnströmung vorliegt.

8. Verfahren nach Anspruch 7, wobei die Strömungsgeschwindigkeit des Bindemittelstromes derartig eingestellt wird, dass über einen Grossteil der Erstreckung oder über die gesamte Erstreckung des Bindemittelstromes zwischen der Eindüsungsstelle (D) und der Stelle, an welcher der Druck der Mischströmung herabgesetzt wird zum Aufschäumen des Bindemittels, eine Dehnströmung vorliegt.

9. Verfahren nach einem der vorangehenden Ansprüche, wobei die Erstreckung des Bindemittelstromes zwischen der Eindüsungsstelle (D) und der Stelle, an welcher der Druck der Mischströmung herabgesetzt wird zum Aufschäumen des Bindemittels, derartig gewählt wird, dass sie einem Mehrfachen, insbesondere zwischen dem Fünfundzwanzigfachen und dem Fünfzigfachen des Durchmessers des Bindemittelstromes an der Eindüsungsstelle entspricht.

10. Verfahren nach einem der vorangehenden Ansprüche, wobei das Herabsetzen des Druckes des Mischstromes zum Aufschäumen des Bindemittels über eine oder mehrere, insbesondere identische Schäumdüsen (3) erfolgt.

11. Verfahren nach einem der vorangehenden Ansprüche, wobei die eingedüste Flüssigkeitsmenge pro Zeiteinheit 1 bis 8 Volumenprozent, bevorzugterweise 2 bis 4 Volumenprozent des Volumenstroms des Bindemittelstromes an der Eindüsungsstelle (D) entspricht.

12. Verfahren nach einem der vorangehenden Ansprüche, wobei die Temperaturen und Drücke des Bindemittelstromes und der eingedüsten Flüssigkeit so gewählt werden, dass an der Eindüsungsstelle (D) ein Viskositätsverhältnis zwischen eingedüster Flüssigkeit und Bindemittel von grösser 0.5 vorliegt, bevorzugterweise von etwa 1.0.

13. Verfahren nach einem der vorangehenden Ansprüche, wobei die Temperaturen des Bindemittelstromes und der eingedüsten Flüssigkeit sowie deren Mengenverhältnis so gewählt werden, dass die theoretische Mischtemperatur der Mischströmung für den Fall, dass die eingedüsten Flüssigkeitstropfen in der flüssigen Phase verbleiben, mindestens 30% über der Verdampfungstemperatur der Flüssigkeit bei Atmosphärendruck liegt, bevorzugterweise mindestens 50%, noch bevorzugter mindestens 60% über der Verdampfungstemperatur der Flüssigkeit bei Atmosphärendruck.

14. Verfahren nach einem der vorangehenden Ansprüche, wobei der Druck in der Mischströmung zwischen der Eindüsungsstelle (D) und der Stelle, an welcher der Druck der Mischströmung herabgesetzt wird zum Aufschäumen des Bindemittels, derartig eingestellt wird, dass die in der Mischströmung enthaltenen Flüssigkeitstropfen bis zu der letztgenannten Stelle flüssig sind und erst durch das Herabsetzen des Druckes der Mischströmung zum Aufschäumen des Bindemittels verdampfen.

15. Verfahren nach einem der vorangehenden Ansprüche, wobei als Bindemittel im Wesentlichen Bitumen und als Flüssigkeit im Wesentlichen Wasser verwendet wird.

16. Verfahren nach einem der vorangehenden Ansprüche, wobei ein Bindemittelstrom bereitgestellt wird, welcher im Wesentlichen aus Bitumen besteht und eine Temperatur von mindestens 150°C aufweist.

17. Verfahren zur Herstellung von Asphalt, wobei ein mit dem Verfahren nach einem der vorangehenden Ansprüche erhaltener Bindemittelschaum, insbesondere Schaumbitumen, mit erhitztem Gesteinssplitt vermischt wird.

18. Anlage zur Durchführung des Verfahrens nach einem der Ansprüche 1-16, umfassend:
a) einen Strömungskanal (1), der an einem ersten (5) seiner beiden Enden mit einer Zuführung für das aufzuschäumende Bindemittel, insbesondere Bitumen, verbunden oder verbindbar ist, zur Erzeugung einer Strömung unter Überdruck aus erhitztem Bindemittel im Strömungskanal (1) im bestimmungsgemässen Betrieb,
b) Mittel (2) zum Eindüsen einer Flüssigkeit, insbesondere Wasser, in die im bestimmungsgemässen Betrieb in dem Strömungskanal (1) erzeugte Strömung aus erhitztem Bindemittel, derart, dass stromabwärts von der Eindüsungsstelle (D) ein Mischstrom unter Überdruck aus Bindemittel mit darin verteilten Flüssigkeitstropfen oder mit darin verteilten Flüssigkeitstropfen und aus diesen entstandenen Dampfblasen im Strömungskanal (1) vorliegt; und
c) Mittel (3) zum Entlassen des Mischstroms aus Bindemittel mit darin verteilten Flüssigkeitstropfen oder mit darin verteilten Flüssigkeitstropfen und aus diesen entstandenen Dampfblasen aus dem Strömungskanal (1) unter einer insbesondere sprunghaften Herabsetzung des Druckes des Mischstromes, insbesondere auf Atmosphärendruck, zum Aufschäumen des Bindemittels infolge einer Verdampfung der in diesem enthaltenen Flüssigkeitstropfen und/oder einer Expansion der aus den Flüssigkeitstropfen entstandenen Dampfblasen,
**dadurch gekennzeichnet, dass** die Mittel (2) zum Eindüsen der Flüssigkeit derartig ausgebildet sind, dass die Flüssigkeit unter einem Winkel (α) von grösser 120°, insbesondere unter einem Winkel (α) von 180° zur Strömungsrichtung (S) der im bestimmungsgemässen Betrieb in dem Strömungskanal (1) erzeugten Strömung aus erhitztem Bindemittel eingedüst werden kann, d.h. in einer Richtung schräg entgegen oder vollständig entgegen der Strömungsrichtung (S) der im bestimmungsgemässen Betrieb in dem Strömungskanal (1) erzeugten Strömung aus erhitztem Bindemittel.

19. Anlage nach Anspruch 18, wobei die Anlage zwischen den Mitteln (2) zur Eindüsung der Flüssigkeit und den Mittel (3) zum Entlassen des Mischstroms aus dem Strömungskanal (1) zum Aufschäumen des Bindemittels keine mechanischen Mischvorrichtungen aufweist, insbesondere keine statischen Mischer.

20. Anlage nach einem der Ansprüche 18 bis 19, wobei die Mittel (2) zum Eindüsen der Flüssigkeit derartig ausgebildet sind, dass die Flüssigkeit im Zentrum der Bindemittelströmung bzw. des Strömungskanals (1) eingedüst werden kann.

21. Anlage nach einem der Ansprüche 18 bis 20, wobei die Erstreckung des Strömungskanals (1) zwischen der Eindüsungsstelle (D) und der Stelle, an welcher der Druck der Mischströmung herabgesetzt wird zum Aufschäumen des Bindemittels, einem Mehrfachen, insbesondere zwischen dem Fünfundzwanzigfachen und dem Fünfzigfachen des Durchmessers des Strömungskanals (1) an der Eindüsungsstelle (D) entspricht.

22. Anlage nach einem der Ansprüche 18 bis 21, wobei die Mittel (3) zum Entlassen des Mischstroms aus dem Strömungskanal (1) zum Aufschäumen des Bindemittels eine oder mehrere, insbesondere identische Schäumdüsen (3) umfassen.

23. Verwendung der Anlage nach einem der Ansprüche 18 bis 22 zur Herstellung von Schaumbitumen.

## Claims

1. Method for producing a binder foam for asphalt production, particularly for producing foam bitumen, comprising the steps:
a) providing a pressurized stream of heated binder, particularly bitumen;
b) providing a liquid, particularly water, having a lower evaporation temperature under atmospheric pressure than the temperature of the provided heated binder stream;
c) injecting the liquid into the binder stream under pressure, such that a pressurized mixture stream of binder with liquid drops dispersed therein or with liquid drops dispersed therein and vapour bubbles resulting from said drops is present downstream of the injection point; and
d) reducing the pressure of the mixture stream, particularly to atmospheric pressure, for foaming the binder as a result of an evaporation of liquid drops contained therein and/or expansion of the vapour bubbles generated from the liquid drops,
**characterized in that** the injection of the liquid into the binder stream is carried out at an angle (α) greater than 120°, particularly at an angle (α) of 180°, with respect to the flow direction (S) of the binder stream, i.e. in a direction oblique against or entirely against the flow direction of the binder stream.

2. Method according to claim 1, wherein no mixing of the mixture stream by mechanic mixing devices, particularly static mixers, is carried out between the injection of the liquid and the reduction of the pressure of the mixture stream for foaming the binder.

3. Method according to one of the preceding claims, wherein the injection of the liquid into the binder stream is done in the center of the binder stream.

4. Method according to one of the preceding claims, wherein a liquid in which the binder is insoluble or only partly soluble is provided and injected.

5. Method according to one of the preceding claims, wherein the liquid is injected into the binder stream under a pressure which is greater than the pressure inside the binder stream at the injection point (D), particularly at least 1 bar greater than the pressure inside the binder stream at the injection point (D).

6. Method according to claim 5, wherein the injection pressure of the liquid is adjusted in such a way that the injection speed of the liquid is at least double the flow speed of the binder stream in the area of the injection point (D).

7. Method according to one of the preceding claims, wherein the flow speed of the binder stream is adjusted in such a way that an elongational flow is present at least in a partial area of the binder stream, particularly in the area of the injection point (D).

8. Method according to claim 7, wherein the flow speed of the binder stream is adjusted in such a way that an elongational flow is present in a majority of the elongation or in the entire elongation of the binder stream between the injection point (D) and the point where the pressure of the mixture stream is reduced for foaming the binder.

9. Method according to one of the preceding claims, wherein the elongation of the binder stream between the injection point (D) and the point where the pressure of the mixture stream is reduced for foaming the binder is chosen in such a way that it corresponds to a multiple of, particularly between twenty five times and fifty times, the diameter of the binder stream at the injection point.

10. Method according to one of the preceding claims, wherein the reduction of the pressure of the mixture stream for foaming the binder stream is done via one or more, particularly identical, foaming nozzles (3).

11. Method according to one of the preceding claims, wherein the injected liquid quantity per time unit corresponds to 1 to 8 percent per volume, preferably 2 to 4 percent per volume, of the binder stream at the injection point (D).

12. Method according to one of the preceding claims, wherein the temperature and pressures of the binder stream and of the injected liquid are chosen in such a way that a viscosity ratio between injected liquid and binder is greater than 0.5, preferably of around 1.0, at the injection point (D).

13. Method according to one of the preceding claims, wherein the temperatures of the binder stream and of the injected liquid as well as their quantity ratio are chosen in such a way that the theoretical mixing temperature of the mixture stream for the case that the injected liquid drops remain in the liquid phase is at least 30% above the evaporation temperature of the liquid at atmospheric pressure, preferably at least 50%, more preferred at least 60%, above the evaporation temperature of the liquid at atmospheric pressure.

14. Method according to one of the preceding claims, wherein the pressure in the mixture stream, between the injection point (D) and the point where the pressure of the mixture stream is reduced for foaming the binder, is adjusted in such a way that the liquid drops contained in the mixture stream are liquid up to the latter point and evaporate only due to the reduction of the pressure of the mixture stream for foaming the binder.

15. Method according to one of the preceding claims, wherein substantially bitumen is used as binder and substantially water is used as liquid.

16. Method according to one of the preceding claims, wherein a binder stream consisting substantially of bitumen and having a temperature of at least 150°C is provided.

17. Method for producing asphalt, wherein a binder foam produced with the method according to one of the preceding claims, particularly foam bitumen, is mixed with stone chippings.

18. Installation for carrying out the method according to one of the claims 1 to 16, comprising:
a) a flow channel (1) being connected or connectable at a first (5) of its two ends to an inlet for the binder, particularly bitumen, to be foamed, for generating a pressurized flow of heated binder in the flow channel (1) in operation as intended,
b) means (2) for injecting a liquid, particularly water, into the stream of heated binder generated in the flow channel (1) in operation as intended, in such a way that downstream of the injection point (D) a pressurized mixture stream of binder with liquid drops dispersed therein or with liquid drops dispersed therein and vapour bubbles resulting from said drops is present in the flow channel (1); and
c) means (3) for releasing the mixture stream of binder with liquid drops dispersed therein or with liquid drops dispersed therein and vapour bubbles from the flow channel (1) in the presence of a particularly abrupt decrease of pressure of the mixture stream, particularly to atmospheric pressure, for foaming the binder as a result of an evaporation of liquid drops contained therein and/or an expansion of the vapour bubbles generated from the liquid drops,
**characterized in that** the means (2) for injecting the liquid are adapted to inject the liquid in such a way that the liquid can be injected at an angle (α) greater than 120°, particularly at an angle (α) of 180°, with respect to the flow direction (S) of the flow of heated binder generated in the flow channel (1) when operated as intended, i.e. in a direction oblique against or entirely against the flow direction (S) of the heated binder stream generated in the flow channel (1) when operated as intended.

19. Installation according to claim 18,
wherein the installation doesn't have mechanic mixing devices, particularly no static mixers, between the means (2) for injecting the liquid and the means (3) for releasing the mixture stream from the flow channel (1) for foaming the binder.

20. Installation according to one of the claims 18 to 19, wherein the means (2) for injecting the liquid are formed in such a way that the liquid can be injected in the center of the binder stream or of the flow channel (1), respectively.

21. Installation according to one of the claims 18 to 20, wherein the elongation of the flow channel (1) between the injection point (D) and the point where the pressure of the mixture stream is reduced for foaming the binder corresponds to a multiple of, particularly between twenty five times and fifty times, the diameter of the flow channel (1) at the injection point (D).

22. Installation according to one of the claims 18 to 21, wherein the means (3) for releasing the mixture stream from the flow channel (1) for foaming the binder comprise one or more, particularly identical, foaming nozzles (3).

23. Use of the installation according to one of the claims 18 to 22 for producing foam bitumen.

## Revendications

1. Procédé de fabrication d'une mousse de liant pour la production d'asphalte, particulièrement pour produire une mousse de bitume, comprenant les étapes:
a) prévoir un flux pressurisé de liant chauffé, particulièrement du bitume;
b) prévoir un liquide, particulièrement d'eau, ayant une température d'évaporation sous pression atmosphérique inférieure par rapport à la température du flux de liant chauffé prévu;
c) injecter le liquide dans le flux de liant sous pression, de sorte qu'un flux mélangé pressurisé avec des gouttes de liquide dispersées dedans ou avec des gouttes de liquide dispersées dedans et des bulles de vapeur qui résultent desdites gouttes soit présent en aval du point d'injection; et
d) réduire la pression du flux mélangé, particulièrement à la pression atmosphérique, pour mousser le liant par suite d'une évaporation des gouttes de liquide contenues dedans et/ou d'une expansion des bulles de vapeur générées à partir des gouttes de liquide,
**caractérisé en ce que** l'injection du liquide dans le flux de liant est effectuée à un angle (α) supérieur à 120°, particulièrement à un angle (α) de 180°, par rapport à la direction d'écoulement (S) du flux de liant, c'est-à-dire dans une direction oblique contre ou entièrement contre la direction d'écoulement du flux de liant.

2. Procédé selon la revendication 1, aucun mixage du flux mélangé par des moyens de mixage mécaniques, particulièrement des mixeurs statiques, étant effectué entre l'injection du liquide et la réduction de la pression du flux mélangé pour mousser le liant.

3. Procédé selon l'une des revendications précédentes, l'injection du liquide dans le flux de liant étant effectuée au centre du flux de liant.

4. Procédé selon l'une des revendications précédentes, un liquide dans lequel le liant est insoluble ou seulement partiellement soluble étant prévu et injecté.

5. Procédé selon l'une des revendications précédentes, le liquide étant injecté dans le flux de liant sous une pression supérieure à la pression à l'intérieur du flux de liant au point d'injection (D), particulièrement supérieur d'au moins 1 bar à la pression à l'intérieur du flux de liant au point d'injection (D).

6. Procédé selon la revendication 5, la pression d'injection du liquide étant ajustée de sorte que la vitesse d'injection du liquide soit au moins double à la vitesse d'écoulement du flux de liant dans la zone du point d'injection (D).

7. Procédé selon l'une des revendications précédentes, la vitesse d'écoulement du flux de liant étant ajustée de sorte qu'un écoulement d'étirement soit présent au moins dans une zone partielle du flux de liant, particulièrement dans une zone du point d'injection (D).

8. Procédé selon la revendication 7, la vitesse d'écoulement du flux de liant étant ajusté de sorte qu'un flux d'étirement soit présent dans une majorité de l'étirement ou dans l'étirement entier du flux de liant entre le point d'injection (D) et le point où la pression du flux mélangé est réduite pour mousser le liant.

9. Procédé selon l'une des revendications précédentes, l'élongation du flux de liant entre le point d'injection (D) et le point où la pression du flux mélangé est réduite pour mousser le liant étant choisie de sorte qu'elle correspond à un multiple, particulièrement entre 25 fois et 50 fois, du diamètre du flux de liant au point d'injection.

10. Procédé selon l'une des revendications précédentes, la réduction de la pression du flux mélangé pour mousser le flux de liant étant effectuée par une ou plusieurs, particulièrement identiques, buses de moussage (3).

11. Procédé selon l'une des revendications précédentes, la quantité du liquide injecté par unité de temps correspondant à 1 à 8 pourcent par volume, préférablement 2 à 4 pourcent par volume, du flux de liant au point d'injection (D).

12. Procédé selon l'une des revendications précédentes, la température et les pressions du flux de liant et du liquide injecté étant choisies de sorte qu'un rapport de viscosité entre le liquide injecté et le liant soit supérieur à 0.5, préférablement d'environ 1.0, au point d'injection (D).

13. Procédé selon l'une des revendications précédentes, les températures du flux de liant et du liquide injecté ainsi que leur rapport de quantité étant choisies de sorte que la température théorétique de mixage du flux mélangé pour le cas que les gouttes de liquide injectées restent dans la phase liquide étant au moins 30% plus élevées que la température d'évaporation du liquide en présence de la pression atmosphérique, préférablement au moins 50%, plus préféré au moins 60%, plus élevées que la température du liquide en présence de la pression atmosphérique.

14. Procédé selon l'une des revendications précédentes, la pression dans le flux mélangé, entre le point d'injection (D) et le point où la pression du flux mélangé est réduite pour mousser le liant, étant ajustée de sorte que les gouttes de liquide contenues dans le flux mélangé sont liquides jusqu'à ce dernier point et s'évaporent uniquement à cause de la réduction de la pression du flux mélangé pour mousser le liant.

15. Procédé selon l'une des revendications précédentes, essentiellement du bitume étant utilisé comme liant et essentiellement d'eau étant utilisée comme liquide.

16. Procédé selon l'une des revendications précédentes, un flux de liant étant prévu, qui consiste essentiellement du bitume et qui a une température d'au moins 150°C.

17. Procédé pour produire d'asphalte, une mousse de liant produite avec le procédé selon l'une des revendications précédentes, particulièrement du bitume moussé, étant mélangée avec des pierres concassées.

18. Installation pour effectuer le procédé selon l'une des revendications 1 à 16, comprenant:
a) un canal d'écoulement (1) étant connecté ou connectable avec une première (5) de ses deux extrémités à une entrée pour le liant, particulièrement du bitume, à mousser, afin de générer un écoulement pressurisé de liant chauffé dans le canal d'écoulement (1) en opération comme prévu,
b) des moyens (2) pour injecter un liquide, particulièrement d'eau, dans le flux de liant chauffé généré dans le canal d'écoulement (1) en opération comme prévu, de sorte qu'un flux mélangé et pressurisé de liant avec des gouttes de liquide dispersées dedans ou avec des gouttes de liquide dispersées dedans et des bulles de vapeur qui résultent desdites gouttes étant présents dans le canal d'écoulement (1) en aval du point d'injection (D); et
c) des moyens (3) pour libérer le flux de liant mélangé avec des gouttes de liquide dispersées dedans ou avec des gouttes de liquide dispersées dedans et des bulles de vapeur du canal d'écoulement (1) en présence d'une chute particulièrement abrupte de pression du flux mélangé, particulièrement à la pression atmosphérique, afin de mousser le liant comme résultat d'une évaporation des gouttes de liquide contenues dedans et/ou d'une expansion des bulles de vapeur générées à partir des gouttes de liquide,
**caractérisée en ce que** les moyens (2) pour injecter le liquide sont adaptés à injecter le liquide de sorte que le liquide puisse être injecté à un angle (α) supérieur à 120°, particulièrement à un angle (α) de 180°, par rapport à la direction d'écoulement (S) du flux de liant chauffé généré dans le canal d'écoulement (1) en opération comme prévu, c'est-à-dire dans une direction oblique contre ou entièrement contre la direction d'écoulement (S) du flux de liant chauffé généré dans le canal d'écoulement (1) en opération comme prévu.

19. Installation selon la revendication 18, l'installation n'ayant pas des moyens de mixage mécaniques, particulièrement pas des mixeurs statiques, entre les moyens (2) d'injection du liquide et les moyens (3) pour libérer le flux mélangé du canal d'écoulement (1) afin de mousser le liant.

20. Installation selon l'une des revendications 18 à 19, les moyens (2) d'injection du liquide étant formés de sorte que le liquide puisse être injecté au centre du flux de liant ou bien du canal d'écoulement (1).

21. Installation selon l'une des revendications 18 à 20, l'élongation du canal d'écoulement (1) entre le point d'injection (D) et le point où la pression du flux mélangé est réduite pour mousser le liant correspondant à un multiple, particulièrement entre 25 fois et 50 fois, du diamètre du canal d'écoulement (1) au point d'injection.

22. Installation selon l'une des revendications 18 à 21, les moyens (3) pour libérer le flux mélangé du canal d'écoulement (1) afin de mousser le liant comprenant une ou plusieurs, particulièrement identiques, buses de moussage (3).

23. Utilisation de l'installation selon l'une des revendications 18 à 22 pour produire de la mousse de bitume.
